# EUROPÄISCHE PATENTANMELDUNG

(11) **EP 1 741 980 A1**
(43) Veröffentlichungstag der Anmeldung: **10.01.2007**
(21) Anmeldenummer: 05014473.2
(22) Anmeldetag: 04.07.2005
(51) Int. Cl.: F23R 3/00, F23M 5/00

(54) **Keramisches Bauteil mit heissgasresistenter Oberfläche und Verfahren zu seiner Herstellung**

(71) Anmelder: SIEMENS AKTIENGESELLSCHAFT, 80333 München (DE)
(72) Erfinder: Grote, Holger, 53121 Bonn (DE)

(57) **Zusammenfassung**

Bei einem keramischen Bauteil (20), welches einen Keramikkörper (30) sowie eine heißgasresistente Oberfläche (24) aufweist, ist die heißgasresistente Oberfläche (24) mit einer reaktionsarmen mineralischen Beschichtung (32) versehen.

## Beschreibung

Die vorliegende Erfindung betrifft ein keramisches Bauteil mit heißgasresistenter Oberfläche sowie ein Verfahren zu seiner Herstellung. Daneben betrifft die vorliegende Erfindung einen Flammraum, insbesondere eine Gasturbinenbrennkammer.

Die Wände von heißgasführenden Flammenräumen wie etwa den Brennkammern von Gasturbinenanlagen erfordern eine thermische Abschirmung der tragenden Wandstruktur gegen einen Angriff des geführten Heißgases. Die thermische Abschirmung kann beispielsweise durch eine der eigentlichen Wandstruktur vorgelagerte Heißgasauskleidung in Form eines keramischen Hitzeschildes realisiert werden. Keramische Materialien bieten sich für den Aufbau eines derartigen Hitzeschildes im Vergleich zu metallischen Werkstoffen aufgrund ihrer hohen Temperaturbeständigkeit, Korrosionsbeständigkeit und ihrer niedrigen Wärmeleitfähigkeit idealerweise an. Der Hitzeschild ist in der Regel aus einer Anzahl von keramischen Hitzeschildelementen aufgebaut, mit denen der Flammraum flächig ausgekleidet ist. Ein solcher keramischer Hitzeschild ist beispielsweise in der EP 0 558 540 B1 beschrieben.

Beim Betrieb eines Flammraums und insbesondere beim Betrieb von Gasturbinenbrennkammern ist der Hitzeschild extremen Belastungen ausgesetzt. Neben thermischen und mechanischen Belastungen sind die Hitzeschildelemente auch stark korrosiven Belastungen aufgrund des strömenden Heißgases ausgesetzt. Durch die korrosiven Belastungen kann es zu einem die Lebensdauer vermindernden Materialverlust am Hitzeschildelement kommen. Dieser Materialverlust ist auf eine Kombination aus Korrosion, anschließendes Nachsintern der Oberfläche und erosiver Belastung aufgrund des hohen Massendurchsatzes an strömendem Heißgas zurückzuführen. In Gasturbinenbrennkammern ist der Materialverlust an der Oberfläche von keramischen Hitzeschildelementen insbesondere im Übergangsbereich von der Brennkammer zur Turbine groß.

Aufgabe der vorliegenden Erfindung ist es daher, ein vorteilhaftes keramisches Bauteil zur Verwendung in einem Flammraum, insbesondere in einer Gasturbinenbrennkammer, zur Verfügung zu stellen. Es ist eine weitere Aufgabe der vorliegenden Erfindung, einen Flammraum mit einem verbesserten Hitzeschild zur Verfügung zu stellen. Schließlich ist es eine Aufgabe der vorliegenden Erfindung, ein Verfahren zum Herstellen eines vorteilhaften keramischen Bauteils zur Verfügung zu stellen.

Die erste Aufgabe wird durch ein keramisches Bauteil nach Anspruch 1, die zweite Aufgabe durch einen Flammraum nach Anspruch 7 und die dritte Aufgabe durch ein Verfahren nach Anspruch 8 gelöst. Die abhängigen Ansprüche enthalten vorteilhafte Ausgestaltungen der Erfindung.

Ein erfindungsgemäßes keramisches Bauteil weist einen Keramikkörper sowie eine heißgasresistente Oberfläche auf. Der Keramikkörper kann bspw. aus einem bis zu 50 Gew.-% Mullit (3Al₂O₃ x 2SiO₂ oder 2Al₂O₃ x SiO₂) und mehr als 50 Gew.-% Korund (Al₂O₃) umfassenden Basismaterial hergestellt sein. Zudem kann das Basismaterial geringe Mengen an Glasphase (SiO₂), d.h. mit einem Anteil von maximal 5 Masse-%, enthalten. Im erfindungsgemäßen keramischen Bauteil ist die heißgasresistente Oberfläche mit einer reaktionsarmen mineralischen Beschichtung versehen. Als reaktionsarme mineralische Beschichtungen kommen insbesondere solche Beschichtungen in Betracht, die Korund (Aluminiumoxid Al₂O₃), Zirkonia (Zirkonoxid, ZrO₂) oder Spinell (MgAl₂O₄) als ein wesentliches beschichtungsmaterial enthalten. Besonders vorteilhaft ist es hierbei, wenn die Beschichtung wenigstens 90 Masse-Prozent des wesentlichen Beschichtungsmaterials enthält. Zur Stabilisierung der Beschichtung und/oder zur Erhöhung ihrer Temperaturstabilität kann sie eine geeignete Dotierung, bspw. Elemente der Lanthanide oder Titan, enthalten.

Aufgrund der reaktionsarmen mineralischen Beschichtung lassen sich chemische Reaktionen, welche die Anfälligkeit des Keramikmaterials für Erosion erhöhen, wirksam unterdrücken. Der Materialverlust bei Beaufschlagung mit strömendem Heißgas ist in keramischen Bauteilen, welche aus einem Mullit und Korund umfassenden Basismaterial aufgebaut sind, auf die folgenden zwei Reaktionen zurückzuführen: 1. Mullitabbau, 2. Kornwachstum und Nachsinterung.

Im strömenden Heißgas üblicherweise vorhandener Wasserdampf führt dazu, dass SiO₂ im Mullit des Basismaterials als SiOₓ in die Gasphase entweichen kann, was zum Abbau von Mullit führt. Das Al₂O₃ aus dem Mullit bleibt in der Beschichtung zurück und bildet dort feine Korundkörner, den sog. sekundären Korund. Die Körner aus sekundärem Korund zeigen Kornwachstum und Versinterung. Kornwachstum und Versinterung nehmen mit der Betriebsdauer, d.h. mit Zunahme der Zeitdauer, über die das keramische Bauteil dem strömenden Heißgas ausgesetzt ist, zu. Diese Prozesse führen daher mit zunehmender Betriebsdauer zu einer Schwächung der Oberfläche, etwa durch Mikrorissbildung. Die Schwächung der Oberfläche hat zur Folge, dass durch das strömende Heißgas Oberflächenpartikel - oder gar ganze Oberflächenbereiche - des keramischen Bauteils abgetragen werden. Sobald eine gewisse Menge an Oberflächenmaterial abgetragen bzw. erodiert ist, müssen die entsprechenden keramischen Bauteile ausgetauscht werden, da ihre Funktionstüchtigkeit nicht länger gewährleistet werden kann.

Durch das Versiegeln der Oberfläche mit der reaktionsarmen mineralischen Beschichtung (EBC Environmental Barrier Coating) kann insbesondere die Korrosion SiO₂-haltiger Phasen des Basismaterials an der Oberfläche des Bauteils beim Beaufschlagen der Oberfläche mit Heißgas wirksam unterdrückt werden. Dadurch wird die Oberfläche weniger anfällig für Erosion. So kann beispielsweise durch eine auf Korund basierende Oberflächenbeschichtung die Betriebsdauer eines keramischen Bauteils im Heißgasstrom erheblich verlängert werden, bevor es ausgetauscht werden muss. Noch effektiver als durch eine auf Korund basierende Beschichtung kann das Nachsintern durch eine auf Spinell basierende Beschichtung unterdrückt werden. Mit der auf Spinell basierenden Beschichtung lässt sich daher die Lebensdauer des keramischen Bauteils weiter erhöhen. Sowohl die auf Korund basierende Beschichtung als auch die auf Spinell basierende Beschichtung behalten ihre grundsätzlichen Materialeigenschaften, beispielsweise eine hohe Beständigkeit gegenüber Temperaturwechsel, auch bei längerem Heißgasangriff und hohen Temperaturen bei.

Besonders vorteilhaft sind die Materialeigenschaften der Beschichtung, wenn der Anteil des Materials, auf dem die Beschichtung basiert, wenigstens 90 Masse-Prozent beträgt und der Glasanteil unter 2 Masse-Prozent liegt. Vorzugsweise ist gar kein Glas im Beschichtungsmaterial vorhanden.

Ein erfindungsgemäßer Flammraum, der insbesondere als Gasturbinenbrennkammer ausgestaltet sein kann, weist eine Wandstruktur und einen an der Wandstruktur zum Inneren des Flammraums hin vorgelagerten keramischen Hitzeschild auf. Der keramische Hitzeschild ist aus einer Anzahl von erfindungsgemäßen keramischen Bauteilen, d.h. aus einer Anzahl von keramischen Hitzeschildelementen, aufgebaut.

Bei dem erfindungsgemäßen Flammraum können aufgrund der erhöhten Resistenz des Hitzeschildes gegenüber Erosion die Wartungsintervalle verlängert und die Austauschraten von Hitzeschildelementen verringert werden.

Im erfindungsgemäßen Verfahren zum Herstellen eines keramischen Bauteils mit heißgasresistenter Oberfläche wird auf die heißgasresistente Oberfläche eine reaktionsarme mineralische Beschichtung aufgebracht. Als Beschichtungen kommen hierbei insbesondere auf Korund basierende Beschichtungen, auf Zirkonia basierende Beschichtungen sowie auf Spinell basierende Beschichtungen in Betracht.

Wie bereits zuvor mit Bezug auf das erfindungsgemäße keramische Bauteil beschrieben, erhöht die reaktionsarme Beschichtung die Widerstandsfähigkeit eines mit ihr ausgestatteten keramischen Bauteils. Für die im erfindungsgemäßen Verfahren zur Anwendung kommende reaktionsarme mineralische Beschichtung gilt das mit Bezug auf die reaktionsarme mineralische Beschichtung des erfindungsgemäßen keramischen Bauteils gesagte analog.

Die reaktionsarme mineralische Beschichtung kann sowohl auf ein gesintertes keramisches Bauteil aufgebracht werden als auch auf ein ungesintertes keramisches Bauteil, einen sogenannten Grünling. In beiden Fällen erfolgt zum Beschichten ein Aufbringen einer Materialzusammensetzung und ein anschließendes Sintern. Wenn die Beschichtung auf einen Grünling aufgebracht wird, kann dieser Sinterprozess zusammen mit dem Sintern des Grünlings erfolgen. Es ist also möglich, die reaktionsarme mineralische Beschichtung auf ein bereits bestehendes keramisches Bauteil, welches bereits eine gewisse Betriebsdauer hinter sich hat, aufzubringen. Auf diese Weise kann etwa eine keramische Flammraumauskleidung mit der reaktionsarmen mineralischen Beschichtung nachgerüstet werden. Die Beschichtung kann aber auch bei der Neuherstellung eines keramischen Bauteils aufgebracht werden.

Das Aufbringen der Materialzusammensetzung auf die Bauteiloberfläche kann auf vielfältige Weise erfolgen, beispielsweise durch Pinseln, Spritzen, etwa Plasmaspritzen oder Flammenspritzen, Spachteln, Tauchen, durch physikalische Abscheidung aus der Gasphase, etc. Vorzugsweise erfolgt das Aufbringen jedoch durch Aufsprühen oder Aufschleudern.

Die Materialzusammensetzung, die auf die zu beschichtende Oberfläche aufgebracht wird, kann im Wesentlichen vollständig aus Korund bestehen. Alternativ ist es jedoch auch möglich, der Materialzusammensetzung neben Korund weitere Bestandteile hinzuzufügen, beispielsweise Magnesiumoxid (MgO). Insbesondere wenn die Zusammensetzung einen Anteil von mindestens 60 Masse-Prozent Korund und einen Anteil von höchstens 40 Masse-Prozent Magnesiumoxid aufweist, führt der anschließende Sinterprozess zu einer auf Spinell basierenden Beschichtung.

Die Materialzusammensetzung für die Beschichtung kann zudem weitere Bestandteile wie etwa Zirkonia aufweisen. Es ist aber auch möglich, dass Zirkonia der einzige Bestandteil der Materialzusammensetzung ist, sodass eine Beschichtung auf Zirkonia-Basis entsteht.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

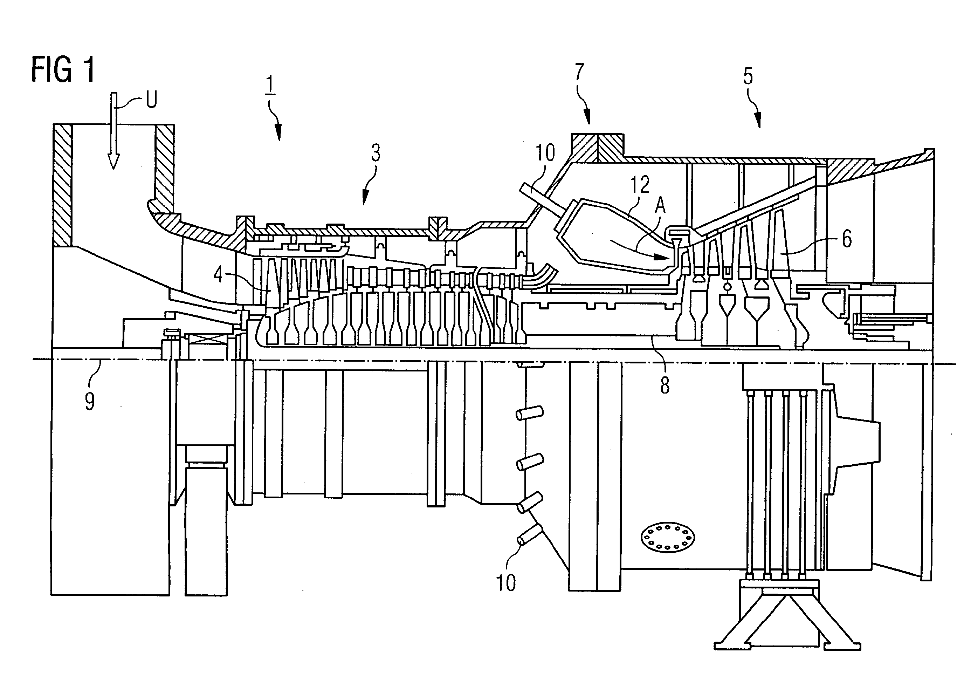

- Figur 1: zeigt eine Gasturbinenanlage in einer teilweise geschnittenen Seitenansicht.
- Figur 2: zeigt einen an einer Flammraumwand angeordneten keramischen Hitzeschild.
- Figur: 3 zeigt ein erfindungsgemäßes keramisches Bauteil in einer geschnittenen Seitenansicht.

Nachfolgend wird die Erfindung anhand eines keramischen Hitzeschildelementes zum Aufbau eines keramischen Hitzeschildes an der Wand einer Gasturbinenbrennkammer beschrieben.

Eine Gasturbinenanlage 1 umfasst einen Verdichterabschnitt 3, einen Turbinenabschnitt und einen Brennerabschnitt 7. Im Verdichterabschnitt 3 und im Turbinenabschnitt 5 sind Verdichterlaufschaufeln 4 bzw. Turbinenlaufschaufeln 6 auf einer gemeinsamen Welle 8 angeordnet, die auch Turbinenläufer genannt wird. Der Turbinenläufer 8 ist um eine zentrale Achse 9 drehbar gelagert.

Der Brennerabschnitt umfasst eine Anzahl Brenner 10, die in eine Brennkammer 12 münden, welche wiederum in den Turbinenabschnitt 5 mündet. Die Brennkammer 12 ist im vorliegenden Ausführungsbeispiel als Ringbrennkammer ausgebildet, d.h. sie erstreckt sich ringförmig um den Turbinenläufer herum, und ist mit einem keramischen Hitzeschild ausgekleidet.

Im Betrieb der Gasturbinenanlage 1 wird über den Verdichter Umgebungsluft U eingesaugt, auf einen höheren Druck verdichtet und in den Brennerabschnitt 7 als sogenannte Verdichterluft ausgegeben. Im Brennerabschnitt 7 tritt die Verdichterluft in den Brenner 10 ein und wird mit einem dem Brenner 10 zugeführten Brennstoff vermischt und in der Brennkammer 12 verbrannt. Die dabei entstehenden Verbrennungsabgase bilden ein Arbeitsmedium A, welches durch die Brennkammer zum Turbinenabschnitt 5 strömt und im Turbinenabschnitt unter Entspannung und Abkühlung Impuls auf die Laufschaufeln 6 überträgt. Die Geometrie der Laufschaufeln sorgt dabei dafür, dass der Impuls den Turbinenläufer 8 in Rotation versetzt. Der rotierende Turbinenläufer 8 treibt einerseits den Verdichter an und ist zudem mit einem Verbraucher (nicht dargestellt) gekoppelt, beispielsweise einem elektrischen Generator zum Erzeugen von Strom.

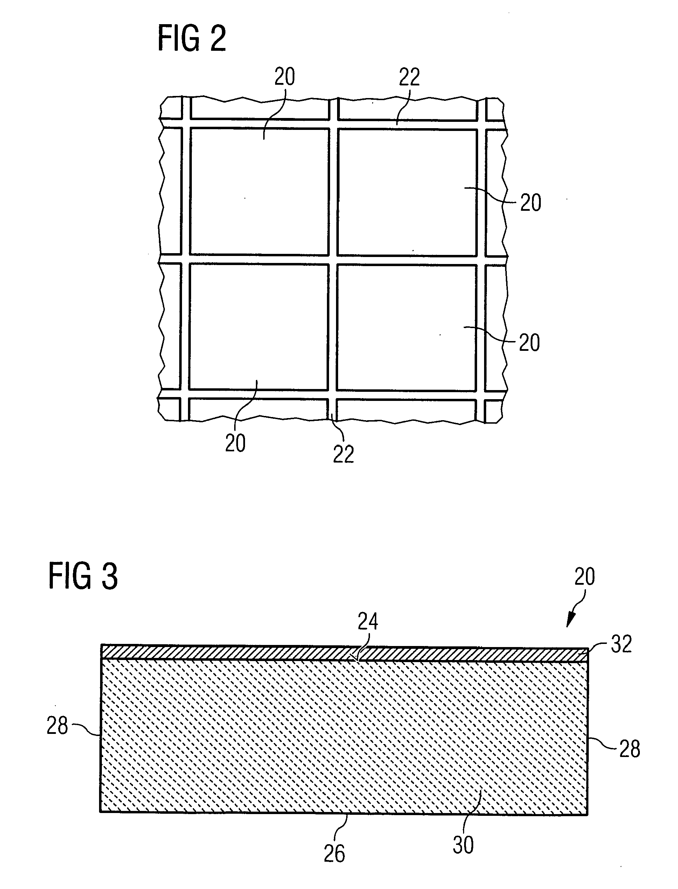

Ein Ausschnitt aus der Brennkammerwand ist in Figur 2 dargestellt. Die Figur zeigt eine Draufsicht auf die Brennkammerwand vom Inneren der Brennkammer aus gesehen. Die Brennkammerwand ist mit einem keramischen Hitzeschild versehen, welcher aus einer Anzahl von keramischen Hitzeschildelementen 20 aufgebaut ist. Die Hitzeschildelemente 20 sind flächendeckend an der eigentlichen Brennkammerwand derart angeordnet, dass sie ihr zum Brennkammerinneren hin vorgelagert sind. Zwischen benachbarten Hitzeschildelementen 20 sind Spalte 22 vorhanden, um bei Kontakt mit dem strömenden Heißgas eine Ausdehnung der einzelnen Hitzeschildelemente zu ermöglichen, ohne dass diese aneinander stoßen.

Ein keramisches Hitzeschildelement 20 ist in Figur 3 in einer geschnittenen Seitenansicht schematisch dargestellt. Das Hitzeschildelement 20 umfasst eine Heißseite 24, welche dem strömenden Heißgas zugewandt ist, wenn das Hitzeschildelement 20 in einen Hitzeschild eingebaut ist und die eine heißgasresistente Oberfläche des Hitzeschildelementes 20 darstellt. Der Heißgasseite 24 gegenüberliegend, weist das Hitzeschildelement 20 eine Kaltseite auf, welche der tragenden Wandstruktur der Brennkammer 12 zugewandt ist, wenn das Hitzeschildelement in einen Hitzeschild eingebaut ist. Zwischen der Heißseite 24 und der Kaltseite 26 erstrecken sich Umfangsseiten 28.

Der Keramikkörper 30 des Hitzeschildelementes 20 ist aus einem Basismaterial aufgebaut, welches ca. 10 Masse-% bis ca. 50 Masse-% Mullit (3Al₂O₃ x 2SiO₂ oder 2Al₂O₃ x SiO₂) und ca. 50 Masse-% bis ca. 90 Masse-% Korund (Al₂O₃) sowie maximal 5 Masse-% Glasphase (SiO₂) umfasst. Ein derartiger Körper kann beispielsweise hergestellt werden, indem eine Formmasse, welche Al₂O₃ und SiO₂ in Pulverform umfasst, in Form gepresst oder gegossen und anschließend gesintert wird.

Die Formmasse kann beispielsweise einen Anteil von 80 Masse-% oder mehr Al₂O₃ und 20 Masse-% oder weniger SiO₂ umfassen. Beim Sintern entsteht daraus eine Keramik, welche einen Mullitanteil bis ca. 50 Masse-% und einen Korundanteil über ca. 50 Masse-% enthält. Statt Al₂O₃ und SiO₂ in Pulverform kann die Masse auch bereits Korund und Mullit in Pulverform umfassen. Zudem kann die Formmasse auch einen Zusatz, beispielsweise Zirkonoxid (ZrO₂) im Bereich bis ca. 30 Masse-Prozent enthalten.

Die durch die Brennkammer 12 strömenden heißen Verbrennungsabgase enthalten eine gewisse Menge an Wasserdampf. Dieser Wasserdampf kann zum Abbau von Mullit und Glasphase führen, wenn diese den heißen Abgasen direkt ausgesetzt sind. Um den Abbau von Mullit und Glasphase zu unterbinden, ist die Heißseite 24 des Hitzeschildelementes 20 mit einer reaktionsarmen mineralischen Beschichtung 32 versehen. Im vorliegenden Ausführungsbeispiel umfasst diese Beschichtung 32 als Hauptbestandteil Spinell, also MgAl₂O₄, als Hauptbestandteil. Ihre Dicke beträgt weniger als 1 mm, vorzugsweise weniger als 0,5 mm.

Diese reaktionsarme mineralische Beschichtung schränkt das Nachsintern im Bereich der Heißgasseite 24 ein. Der eingangs mit Bezug auf den Stand der Technik beschriebene Materialabtrag kann daher mittels der Beschichtung wirkungsvoll reduziert werden. Der Einsatz von Spinell als Hauptbestandteil der Beschichtung führt auch dazu, dass die grundsätzlichen Materialeigenschaften wie etwa die Beständigkeit gegenüber Temperaturwechseln, auch bei längerem Heißgasangriff beibehalten werden. Insgesamt lässt sich so die Lebensdauer des Hitzeschildelementes 20 verlängern.

Zum Herstellen der Beschichtung auf Spinell-Basis wird auf die Oberfläche eines herzustellenden, bereits gepressten Hitzeschildelementes vor dem Sintern, den sog. Grünling, eine Materialzusammensetzung aufgetragen, welche Al₂O₂ mit einem Anteil von über 60 Masse-% und Magnesiumoxid (MgO) mit einem Masseanteil bis 40 Masse-% enthält. Wenn anschließend ein Sintern mit Temperaturen bis maximal ca. 1650° C erfolgt, wandelt sich die Beschichtungsmasse in einen Beschichtung auf Spinell-Basis um, in welcher der Masseanteil an Spinell über 90 Masse-% liegt.

Vorzugsweise enthält die Materialzusammensetzung für die Beschichtung sehr wenig bis gar kein Siliziumoxid. Unter sehr wenig Siliziumoxid soll hierbei ein Anteil von nicht mehr als 2 Masse-% angesehen werden.

In einer Abwandlung des Herstellungsverfahrens für das erfindungsgemäße keramische Hitzeschildelement wird die Beschichtungsmasse auf einen bereits gesinterten Keramikkörper aufgebracht. In einem weiteren Sinterprozess mit Temperaturen bis maximal ca. 1650° C wird dann die Masse in die Beschichtung auf Spinell-Basis umgewandelt. Auf die Weise lassen sich insbesondere auch bereits im Einsatz befindliche keramische Hitzeschildelemente mit der reaktionsarmen mineralischen Beschichtung nachrüsten.

Alternativ zur Herstellung der auf Spinell basierenden Beschichtung unter Verwendung der Al₂O₂ und MgO enthaltenden Beschichtungsmasse kann das Herstellen der Beschichtung auch durch Aufbringen einer Spinell enthaltenden Suspension auf den Grünling oder den bereits gesinterten Keramikkörper und ein anschließendes Sintern erfolgen.

Zum Aufbringen der Beschichtungsmasse oder der Suspension auf die Oberfläche des gepressten oder des bereits gebrannten Keramikkörpers können alle Verfahren zur Anwendung kommen, mit denen sich Beschichtungsmassen oder Suspensionen auf Oberflächen aufbringen lassen. Insbesondere kann die Beschichtungsmasse oder die Suspension durch Aufschleudern, Aufsprühen oder Aufspritzen aufgebracht werden. Geeignete sind bspw. auch thermische Spritzverfahren wie etwa Plasmaspritzen oder Flammspritzen.

Im beschriebenen Ausführungsbeispiel bildet Spinell die Basis der reaktionsarmen mineralischen Beschichtung 32. In alternativenAusgestaltungen kann jedoch auch Korund oder Zirkoniumoxid die Basis der reaktionsarmen mineralischen Beschichtung bilden. Das Herstellen der Beschichtungen auf Korund-Basis bzw. Zirkoniumoxid-Basis erfolgt wie das Herstellen der Beschichtung auf Spinell-Basis, jedoch sind die Sinterbedingungen an die andere Materialzusammensetzung der Beschichtung anzupassen.

Die Beschichtung lässt sich unabhängig davon, auf welche Materialien sie basiert, im Wesentlichen auf alle Arten von keramischen Bauteilen aufbringen.

## Patentansprüche

1. Keramisches Bauteil (20), welches einen Keramikkörper (30) sowie eine heißgasresistente Oberfläche (24) aufweist, **dadurch gekennzeichnet , dass** die heißgasresistente Oberfläche (24) mit einer reaktionsarmen mineralischen Beschichtung (32) versehen ist.

2. Keramisches Bauteil (20) nach Anspruch 1,
**dadurch gekennzeichnet, dass** die Beschichtung (32) auf Korund oder Zirkonia oder Spinell basiert.

3. Keramisches Bauteil (20) nach Anspruch 2,
**dadurch gekennzeichnet, dass** die Beschichtung (32) wenigstens 90 Masse-% Korund enthält.

4. Keramisches Bauteil (20) nach Anspruch 2,
**dadurch gekennzeichnet, dass** die Beschichtung (32) wenigstens 90 Masse-% Zirkonia enthält.

5. Keramisches Bauteil (20) nach Anspruch 2,
**dadurch gekennzeichnet, dass** die Beschichtung (32) wenigstens 90 Masse-% Spinell enthält.

6. Keramisches Bauteil (20) nach einem der Ansprüche 1 bis 5,
**dadurch gekennzeichnet, dass** die Beschichtung (32) höchstens 2% Siliziumdioxid enthält.

7. Keramisches Bauteil (20) nach einem der Ansprüche 1 bis 6,
**dadurch gekennzeichnet, dass** die Beschichtung (32) eine Dotierung enthält.

8. Flammraum, insbesondere Gasturbinenbrennkammer (12), mit einer Wandstruktur und einem an der Wandstruktur zum Inneren des Flammraums hin vorgelagerten keramischen Hitzeschild, **dadurch gekennzeichnet, dass** der keramische Hitzeschild aus einer Anzahl von keramischen Bauteilen (20) nach einem der vorangehenden Ansprüche aufgebaut ist.

9. Verfahren zum Herstellen eines keramischen Bauteils (20) mit heißgasresistenter Oberfläche, **dadurch gekennzeichnet, dass** eine reaktionsarme mineralische Beschichtung (32) auf wenigstens eine Oberfläche (24) des keramischen Bauteils (20) aufgebracht wird.

10. Verfahren nach Anspruch 9,
durch **gekennzeichnet**, dass die Beschichtung (32) auf ein gesintertes keramisches Bauteil (20) aufgebracht wird.

11. Verfahren nach Anspruch 9,
durch **gekennzeichnet**, dass die Beschichtung (32) auf ein ungesintertes keramisches Bauteil (20) aufgebracht wird und nach dem Aufbringen der Beschichtung ein Sintern des keramischen Bauteils (20) erfolgt.

12. Verfahren nach einem der Ansprüche 9 bis 11,
**dadurch gekennzeichnet, dass** eine Materialzusammensetzung auf die zu beschichtende Oberfläche (24) des keramischen Bauteils (20) aufgebracht wird, die Al₂O₃ umfasst.

13. Verfahren nach Anspruch 12,
**dadurch gekennzeichnet, dass** eine Materialzusammensetzung auf die zu beschichtende Oberfläche (24) des keramischen Bauteils (20) aufgebracht wird, die Al₂O₃ und MgO umfasst.

14. Verfahren nach Anspruch 13,
**dadurch gekennzeichnet, dass** der Anteil an Al₂O₃ mindestens 60 Masse-% und der Anteil an MgO höchstens 40 Masse-% beträgt.

15. Verfahren nach einem der Ansprüche 9 bis 11,
**dadurch gekennzeichnet, dass** eine Materialzusammensetzung auf die zu beschichtende Oberfläche (24) des keramischen.Bauteils (20) aufgebracht wird, die Spinell umfasst.

16. Verfahren nach einem der Ansprüche 9 bis 15,
**dadurch gekennzeichnet, dass** eine Materialzusammensetzung auf die zu beschichtende Oberfläche (24) des keramischen Bauteils (20) aufgebracht wird, die ZrO₂ umfasst.

17. Verfahren nach einem der Ansprüche 9 bis 16,
**dadurch gekennzeichnet, dass** die Materialzusammensetzung mittels eines Schleuderverfahrens aufgebracht wird.

18. Verfahren nach einem der Ansprüche 9 bis 16,
**dadurch gekennzeichnet, dass** die Materialzusammensetzung mittels eines Sprühverfahrens aufgebracht wird.

19. Verfahren nach einem der Ansprüche 9 bis 16,
**dadurch gekennzeichnet, dass** die Materialzusammensetzung mittels eines Sritzverfahrens aufgebracht wird.
